# EUROPÄISCHE PATENTANMELDUNG

(11) **EP 2 015 423 A1**
(43) Veröffentlichungstag der Anmeldung: **14.01.2009**
(21) Anmeldenummer: 08104665.8
(22) Anmeldetag: 08.07.2008
(51) Int. Cl.: H02J 9/00, G06F 1/30

(54) **Stromversorgung und elektronische Baueinheit mit einer Stromversorgung**

(30) Priorität: 12.07.2007 DE 102007032534
(71) Anmelder: Siemens Aktiengesellschaft, 80333 München (DE)
(72) Erfinder: Heinbockel, Stefan, 70191, Stuttgart (DE); Coulon, David, 71067, Sindelfingen (DE)

(57) **Zusammenfassung**

Die Erfindung betrifft eine Stromversorgung (1) für mindestens einen elektronischen Verbraucher (2), insbesondere eine elektronische Baueinheit, wobei zusätzlich zu einer Hauptstromversorgung (4) mit einer Betriebsspannung (U_{B}) in einem vorgegebenen ersten Spannungsbereich ein Hilfsenergiespeicher (5) mit einer vorgegebenen Maximalspannung (Uₘₐₓ) vorgesehen ist, der im Normalbetrieb der Hauptstromversorgung (4) auf eine unterhalb der Maximalspannung (Uₘₐₓ) liegende erste Spannung (U₁) ladbar ist, wobei im Fehlerfall der Hauptstromversorgung (4) die erste Spannung (U₁) in eine der Betriebsspannung (U_{B}) entsprechende zweite Spannung (U₂) wandelbar ist.

## Beschreibung

Die Erfindung betrifft eine Stromversorgung und eine elektronische Baueinheit mit einer derartigen Stromversorgung.

Üblicherweise besteht die Stromversorgung von elektronischen Baueinheiten, wie z. B. Netzwerkcomputern, autarken Meldeeinrichtungen und/oder Mobilfunkstationen mit integrierten Kommunikationsmodulen zur drahtlosen Kommunikation der elektronischen Baueinheit mit anderen Baueinheiten oder Modulen, aus einer netzbetriebenen Hauptstromversorgung und einem wiederaufladbaren Energiespeicher vielfältiger chemischer Zusammensetzung, wie beispielsweise Nickel-Cadmium-Batterien (Ni-Cd), Lithium-Ionen-Batterien, Nickel-Metall-Hydrid-Batterien (Ni-MH). Dabei dient die netzbetriebene Hauptstromversorgung sowohl dem Betrieb der elektronischen Baueinheit als auch dem Laden des wiederaufladbaren Energiespeichers, der insbesondere der Notstromversorgung der elektronischen Baueinheit bei Ausfall oder im Fehlerfall der Hauptstromversorgung dient. Auch können separate Ladegeräte zum Laden der Energiespeicher vorgesehen sein.

Derartige Energiespeicher weisen üblicherweise eine begrenzte Lebensdauer temperaturabhängig von beispielsweise einem Jahr bis fünf Jahren auf und müssen somit spätestens nach fünf Betriebsjahren ausgetauscht werden. Hierdurch ist der Betrieb der elektronischen Baueinheit hinsichtlich des Einsatzes solcher Energiespeicher nicht wartungsfrei. Bei Verwendung derartiger Energiespeicher beispielsweise in Meldegebern von Einrichtungen in öffentlichen Stromversorgungs- oder Kommunikationsnetzen, z. B. in Transformatorstationen oder Mobilfunkstationen, führt dies zu einem hohen Zeitaufwand und zu einem hohen Wartungs- und Serviceaufwand.

Der Erfindung liegt daher die Aufgabe zugrunde, eine Stromversorgung für eine elektronische Baueinheit anzugeben, welche über einen langen Zeitraum weitgehend wartungsfrei betrieben werden kann. Des Weiteren ist eine mit einer derartigen Stromversorgung betriebene elektronische Baueinheit anzugeben.

Die Aufgabe wird erfindungsgemäß durch eine Stromversorgung mit den im Anspruch 1 angegebenen Merkmalen gelöst. Hinsichtlich der elektronischen Baueinheit wird die Aufgabe erfindungsgemäß durch die im Anspruch 11 angegebenen Merkmale gelöst.

Vorteilhafte Weiterbildungen der Erfindung sind Gegenstand der Unteransprüche.

Bei der erfindungsgemäßen Stromversorgung für mindestens einen elektronischen Verbraucher, insbesondere eine elektronische Baueinheit, ist zusätzlich zu einer Hauptstromversorgung mit einem vorgegebenen ersten Spannungsbereich ein Hilfsenergiespeicher mit einer vorgegebenen Maximalspannung vorgesehen, der im Normalbetrieb der Hauptstromversorgung auf eine unterhalb der Maximalspannung liegende erste Spannung ladbar ist. Im Fehlerfall der Hauptstromversorgung ist die erste Spannung des Hilfsenergiespeichers auf eine innerhalb des vorgegebenen ersten Spannungsbereiches der Betriebsspannung liegende zweite Spannung wandelbar, so dass die elektronische Baueinheit vom Hilfsenergiespeicher versorgt wird.

In einer bevorzugten Ausführungsform ist der Hilfsenergiespeicher ein Energiespeicher mit hoher Leistungsdichte, insbesondere ein elektrochemischer Doppelschichtkondensator (auch Superkondensator genannt) oder ein elektrochemischer Doppelschichtkondensator mit oberflächennahen Redoxprozessen (auch Ultrakondensator genannt). Der Doppelschichtkondensator zeichnet sich durch einen geringen Innenwiderstand und sehr hohe Entlade- sowie Ladeströme aus, so dass sehr schnelle Entlade- bzw. Ladezeiten von wenigen Sekunden möglich sind.

Somit sind aufwändige Entlade- und Ladeüberwachungen vermieden. Der Doppelschichtkondensator eignet sich aufgrund seiner Eigenschaften als Hilfsenergiespeicher (auch gepufferte Stromversorgung oder Sekundärquelle genannt) zum Überbrücken kurzer Stromunterbrechungen (im Sekundenbereich, < 1 Minute) bzw. der Kompensation von kurzzeitigen Spannungseinbrüchen.

Demgegenüber ist die Hauptstromversorgung (auch Primärquelle genannt) bevorzugt ein Energiespeicher mit hoher Energiedichte (= Bereitstellung großer Energiemengen, lange Lade- und Entladezeiten), beispielsweise ein Akkumulator, eine Batterie, ein Netzteil oder ein Generator.

In einer möglichen Ausführungsform ist der Hilfsenergiespeicher primärseitig über einen Gleichspannungswandler, z. B. einen Abwärtswandler, mit der Hauptstromversorgung verbunden. Sekundärseitig ist der Hilfsenergiespeicher über einen Gleichspannungswandler, z. B. einen Aufwärtswandler, mit der Hauptstromversorgung und dem elektronischen Verbraucher verbunden.

Vorzugsweise sind die als Aufwärtswandler oder Abwärtswandler ausgebildeten primärseitigen und sekundärseitigen Gleichspannungswandler jeweils als eine integrierte Schaltung ausgebildet. Dabei wandelt der sekundärseitige Gleichspannungswandler, z. B. ein Aufwärtswandler, die am Hilfsenergiespeicher anliegende erste Spannung auf eine innerhalb des ersten Spannungsbereiches der Betriebsspannung liegende zweite Spannung. Hierdurch ist die elektronische Baueinheit beispielsweise im Fehlerfall der Hauptstromversorgung mit dem Hilfsenergiespeicher zur kurzzeitigen Spannungsversorgung verbunden. Bei einer Verwendung der Stromversorgung beispielsweise in einer autarken oder mobilen elektronischen Baueinheit mit integriertem Kommunikationsmodul, dessen Hauptstromversorgung ausgefallen ist, kann so mittels der kurzzeitigen Spannungsversorgung durch den Hilfsenergiespeicher beispielsweise eine Meldung, insbesondere eine drahtlos übermittelbare Meldung, an eine Zentrale ausgesendet werden. Dabei kann die am Hilfsenergiespeicher anliegende erste Spannung, die kleiner als die Maximalspannung des Hilfsenergiespeichers ist, kleiner als die minimale Betriebsspannung der Hauptstromversorgung sein oder umgekehrt. Für die kurzzeitige Notstromversorgung wird daher mittels des sekundärseitigen Gleichspannungswandlers die erste Spannung des Hilfsenergiespeichers auf zumindest die minimale Betriebsspannung der Hauptstromversorgung hoch oder runter gesetzt und gewandelt. Beispielsweise wird eine erste Spannung von 2 V des Hilfsenergiespeichers auf die übliche minimale Betriebsspannung der Hauptstromversorgung von 5 V gewandelt.

In einer weiteren bevorzugten Ausführungsform wandelt der primärseitige Gleichspannungswandler, z. B. ein Abwärtswandler, eine an der Hauptstromversorgung anliegende momentane Betriebsspannung, die größer oder kleiner ist, auf die erste Spannung des Hilfsenergiespeichers. Diese erste Spannung dient dem Laden des Hilfsenergiespeichers. Um die Lebensdauer des insbesondere als Notstromversorgung dienenden Hilfsenergiespeichers zu verlängern, wird der Hilfsenergiespeicher im Nichtgebrauch und somit in Ruhestellung auf einen Spannungswert geladen, der unterhalb der Maximalspannung, d.h. unterhalb der maximal zulässigen Spannung, des Doppelschichtkondensators liegt, beispielsweise auf einen Wert von 2 V. Dabei wird der Hilfsenergiespeicher mittels der Hauptstromversorgung über den an diese anschließbaren primärseitigen Gleichspannungswandler, z. B. einen Abwärtswandler, im Normalbetrieb der Hauptstromversorgung und somit im Ruhebetrieb des Hilfsenergiespeichers stets auf einen niedrigen Spannungswert, d.h. unterhalb der maximal zulässigen Spannung, geladen. Hierdurch kann die Lebensdauer eines mit einem derart begrenzten Spannungswert geladenen Hilfsenergiespeichers gegenüber einem herkömmlich geladenen Hilfsenergiespeicher maximal verlängert werden. Je nach gegebener Betriebstemperatur und in Abhängigkeit vom Typ des eingesetzten Hilfsenergiespeichers kann sich die Lebensdauer entsprechend verlängern.

Zweckmäßigerweise ist dem Hilfsenergiespeicher primärseitig und sekundärseitig jeweils mindestens ein Sperrelement vorgeschaltet. Das Sperrelement ist beispielsweise als Diode, insbesondere als eine Sperrdiode, ausgeführt.

Durch die Verwendung einer Stromversorgung mit einem derart lebensverlängernden Hilfsenergiespeicher in einer elektronischen Baueinheit ist diese insbesondere für einen autarken und hinsichtlich der Stromversorgung weitgehend wartungsfreien Betrieb geeignet. Darüber hinaus ist sichergestellt, dass bei Ausfall der Hauptstromversorgung mittels der kurzzeitigen Versorgung der elektronischen Baueinheit durch den Hilfsenergiespeicher genügend Zeit zur Absendung von Meldungen verbleibt. Dazu ist die elektronische Baueinheit zweckmäßigerweise mit einem integrierten Kommunikationsmodul versehen. Bevorzugt ist zumindest das Kommunikationsmodul über den Hilfsenergiespeicher bei Ausfall der Hauptstromversorgung betreibbar. Die Stromversorgung mit einem derart im Normalbetrieb der Hauptstromversorgung ladbaren Hilfsenergiespeicher wird insbesondere in autarken oder dezentral angeordneten elektronischen Baueinheiten, wie z. B. in einem Netzwerkcomputer eines Kommunikationsnetzes, in mobilen Meldeeinrichtungen von Einrichtungen im öffentlichen Stromversorgungsnetz oder Einrichtungen von Mobilfunkstationen, die bevorzugt jeweils mit einem Kommunikationsmodul zum Datenaustausch versehen sind, verwendet. Dabei wird als Kommunikationsmodul insbesondere ein drahtloses Kommunikationsmodul für eine Funkübertragung in einem Funknetz, insbesondere in einem GSM-, GPRS- und/oder UMTS-Netz (GSM = Global System for Mobil Communication, GPRS = General Packet Radio System, UMTS = Universal Mobile Telecommunications System), eingesetzt.

Ausführungsbeispiele der Erfindung werden anhand einer Zeichnung näher erläutert. Darin zeigt:

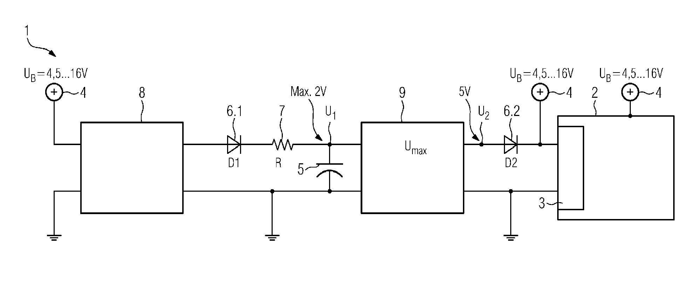

FIG 1 schematisch eine Stromversorgung mit einer Hauptstromversorgung und einem Hilfsenergiespeicher einer elektronischen Baueinheit.

Figur 1 zeigt eine Stromversorgung 1 für mindestens einen elektronischen Verbraucher 2, insbesondere eine elektronische Baueinheit. Der elektronische Verbraucher 2 ist beispielsweise eine elektronische Meldeeinrichtung einer autarken elektronischen Einrichtung im öffentlichen Stromversorgungsnetz oder im Mobilfunknetz. Bei der elektronischen Meldeeinrichtung kann es sich beispielsweise um einen Kurzschlussmelder in einer Transformatorstation handeln. Derartige Meldeeinrichtungen sind zum Datenaustausch beispielsweise mit einer Zentralen oder mit anderen Einrichtungen mit einem Kommunikationsmodul 3 versehen. Das Kommunikationsmodul 3 dient insbesondere der drahtlosen Kommunikation beispielsweise einer Funkkommunikation im jeweiligen Netz, insbesondere einem Funknetz, z. B. einem GSM-, GPRS- und/oder UMTS-Netz. Dazu ist das Kommunikationsmodul 3 als ein GSM-, GPRS- und/oder UMTS-Modul ausgebildet.

Im Normalbetrieb des elektronischen Verbrauchers 2 wird dieser von einer Hauptstromversorgung 4 mit einer Betriebsspannung U_{B} in einem vorgegebenen ersten Spannungsbereich von 4.5 V bis 16 V gespeist. Die Hauptstromversorgung 4 ist ein Energiespeicher mit hoher Energiedichte, beispielsweise ein Akkumulator, eine Batterie, ein Netzteil oder ein Generator. Die Hauptstromversorgung 4 dient dabei als Primärquelle der Versorgung sowohl der elektronischen Baueinheit 4 als auch des Kommunikationsmoduls 3 und gegebenenfalls weiterer, nicht näher dargestellter Komponenten der elektronischen Baueinheit 2.

Zusätzlich zur Hauptstromversorgung 4 ist ein Hilfsenergiespeicher 5 zur hilfsweisen Versorgung zumindest einer der Komponenten der elektronischen Baueinheit 2, insbesondere zur Versorgung des Kommunikationsmoduls 3 im Fehlerfall der Hauptstromversorgung 4, z. B. bei Ausfall dieser, vorgesehen. Dabei dient der Hilfsenergiespeicher 3 insbesondere einer kurzzeitigen Versorgung von sicherheitsrelevanten Komponenten der elektronischen Baueinheit 2, damit diese in einen sicheren Zustand gefahren werden können und/oder sicherheitsrelevante Maßnahmen ausführen können, wie z. B. Warn- oder Fehlermeldungen auslösen und übertragen. Beispielsweise ist es bei einer autarken oder dezentralen elektronischen Baueinheit 2, wie einer Transformatorstation in einem Stromversorgungsnetz, von Bedeutung, dass im Kurzschlussfall eine Fehlermeldung an eine Zentrale gesendet werden kann. Hierzu wird das Kommunikationsmodul 3 der Transformatorstation bei Ausfall der Hauptstromversorgung 4 über den Hilfsenergiespeicher 5 weiterhin mit Strom versorgt.

Dabei ist der Hilfsenergiespeicher 5 als ein Energiespeicher mit hoher Leistungsdichte, insbesondere als ein elektrochemischer Doppelschichtkondensator, ausgebildet, der auf eine vorgegebene Maximalspannung Uₘₐₓ ladbar ist.

Zum Laden des Hilfsenergiespeichers 5 ist dieser primärseitig mit der Hauptstromversorgung 4 verbunden. Sekundärseitig ist der Hilfsenergiespeicher 5 mit dem elektronischen Verbraucher 2 verbunden. Sowohl primärseitig als auch sekundärseitig ist dem Hilfsenergiespeicher 5 jeweils ein Sperrelement 6.1 bzw. 6.2, insbesondere eine Diode, vorgeschaltet. Primärseitig ist darüber hinaus ein Widerstand 7 dem Hilfsenergiespeicher 5 vorgeschaltet.

Für einen die übliche Lebensdauer verlängernden Betrieb des Hilfsenergiespeichers 5 wird dieser im Normalbetrieb der Hauptstromversorgung 4 und somit im Ruhebetrieb des Hilfsenergiespeichers 5 von der Hauptstromversorgung 4 auf eine unterhalb der vorgegebenen Maximalspannung Uₘₐₓ liegende erste Spannung U₁ geladen. Dabei liegt der Wert der ersten Spannung U₁ des Hilfsenergiespeichers 5 stets unterhalb der Maximalspannung Uₘₐₓ, d.h. der maximal zulässigen Spannung. Der Wert der Maximalspannung Uₘₐₓ hängt maßgeblich vom Aufbau des Hilfsenergiespeichers 5 ab, insbesondere von der Anzahl der Einzelzellen des Hilfsenergiespeichers 5. Beträgt beispielsweise die maximal zulässige Spannung für einen eine Einzelzelle umfassenden Hilfsenergiespeicher 5 ca. 2.5 V, so wird der Hilfsenergiespeicher 5 auf eine unterhalb der Maximalspannung Uₘₐₓ liegende erste Spannung U1 von 2 V geladen und betrieben. D.h. der Hilfsenergiespeicher 5 wird im Ruhebetrieb auf maximal 2 V aufgeladen. Bei einem mehrere Einzelzellen umfassenden Hilfsenergiespeicher 5 kann der Wert für die maximal zulässige Spannung Uₘₐₓ und somit der Wert der ersten Spannung U₁ höher liegen.

Um den Hilfsenergiespeicher 5 mit einem derart begrenzten Spannungswert zu betreiben und zu laden, ist dem Hilfsenergiespeicher 5 ein Abwärtswandler 8, insbesondere ein Gleichspannungswandler, vorgeschaltet, der die momentane Betriebsspannung U_{B} der Hauptstromversorgung 4 auf den Wert der ersten Spannung U₁ wandelt. Dabei ist der Wert der ersten Spannung U₁ (= Ausgangsspannung des Abwärtswandlers 8)_kleiner als der Wert der zulässigen Maximalspannung Uₘₐₓ des Hilfsenergiespeichers 1 und kleiner als der Wert der momentanen Betriebsspannung U_{B} (= Eingangsspannung des Abwärtswandlers 8). Der Abwärtswandler 8 ist beispielsweise als eine integrierte Schaltung ausgeführt, wobei die Höhe der Ausgangsspannung auf die einzustellende erste Spannung U₁ stufenweise oder kontinuierlich zum Laden des Hilfsenergiespeichers 5 geregelt wird.

Zur weiteren, zumindest kurzzeitigen Versorgung der elektronischen Baueinheit 2 auch bei Ausfall der Hauptstromversorgung 4 ist der Hilfsenergiespeicher 5 sekundärseitig mit einem Aufwärtswandler 9 verbunden, der die erste Spannung U₁ des Hilfsenergiespeichers 5 zumindest kurzzeitig auf eine die Betriebsspannung U_{B} entsprechende zweite Spannung U₂ wandelt. Dabei weist die gewandelte zweite Spannung U₂ und somit die einzustellende Notstromspannung einen Spannungswert auf, der größer als 2 V ist und beispielsweise 5 V beträgt und der innerhalb des vorgegebenen ersten Spannungsbereiches der Betriebsspannung U_{B} liegt. Der Aufwärtswandler 9 ist beispielsweise als eine integrierte Schaltung ausgeführt, wobei die Höhe dessen Ausgangsspannung und somit die einzustellende zweite Spannung U₂ stufenweise oder kontinuierlich geregelt wird.

Zweckmäßigerweise sind der Aufwärtswandler 9 und der Abwärtswandler 8 Gleichspannungswandler, die wiederum jeweils als eine integrierte Schaltung ausgebildet sind. Auch kann zumindest einer der Gleichspannungswandler ein Spannungsteiler sein oder in einer anderen geeigneten Form ausgeführt sein.

Je nach Größe und Betriebsparameter der Hauptstromversorgung 4 und des Hilfsenergiespeichers 5 können auch andere Spannungswerte eingestellt und entsprechend gewandelt werden, so dass primärseitig beispielsweise ein Aufwärts- und sekundärseitig ein Abwärtswandler angeordnet sind oder umgekehrt, wie oben beschrieben.

## Patentansprüche

1. Stromversorgung (1) für mindestens einen elektronischen Verbraucher (2), insbesondere eine elektronische Baueinheit, wobei zusätzlich zu einer Hauptstromversorgung (4) mit einer Betriebsspannung (U_{B}) in einem vorgegebenen ersten Spannungsbereich ein Hilfsenergiespeicher (5) mit einer vorgegebenen Maximalspannung (Uₘₐₓ) vorgesehen ist, der im Normalbetrieb der Hauptstromversorgung (4) auf eine unterhalb der Maximalspannung (Uₘₐₓ) liegende erste Spannung (U1) ladbar ist, wobei im Fehlerfall der Hauptstromversorgung (4) die erste Spannung (U₁) in eine der Betriebsspannung (U_{B}) entsprechende zweite Spannung (U₂) wandelbar ist.

2. Stromversorgung nach Anspruch 1, wobei der Hilfsenergiespeicher (5) ein Doppelschichtkondensator ist.

3. Stromversorgung nach Anspruch 1 oder 2, wobei die Hauptstromversorgung (4) ein Akkumulator, eine Batterie, ein Netzteil oder ein Generator ist.

4. Stromversorgung nach einem der Ansprüche 1 bis 3, wobei der Hilfsenergiespeicher (5) primärseitig über einen Gleichspannungswandler mit der Hauptstromversorgung (4) verbunden ist.

5. Stromversorgung nach Anspruch 4, wobei der primärseitige Gleichspannungswandler eine an der Hauptstromversorgung (4) anliegende momentane Betriebsspannung (U_{B}) auf die erste Spannung (U₁) des Hilfsenergiespeichers (5) wandelt.

6. Stromversorgung nach Anspruch 4 oder 5, wobei der primärseitige Gleichspannungswandler ein Abwärtswandler (8) ist, der als eine integrierte Schaltung ausgebildet ist.

7. Stromversorgung nach einem der Ansprüche 1 bis 6, wobei der Hilfsenergiespeicher (5) sekundärseitig über einen Gleichspannungswandler mit dem elektronischen Verbraucher (2) verbunden ist.

8. Stromversorgung nach Anspruch 7, wobei der sekundärseitige Gleichspannungswandler die am Hilfsenergiespeicher (5) anliegende erste Spannung (U₁) im Fehlerfall der Hauptstromversorgung (4) auf eine der Betriebsspannung (U_{B}) entsprechende zweite Spannung (U₂) wandelt.

9. Stromversorgung nach Anspruch 8 oder 9, wobei der sekundärseitige Gleichspannungswandler ein Aufwärtswandler (9) ist, der als eine integrierte Schaltung ausgebildet ist.

10. Stromversorgung nach einem der Ansprüche 1 bis 9, wobei dem Hilfsenergiespeicher (5) primärseitig und sekundärseitig jeweils mindestens ein Sperrelement (6.1, 6.2) vorgeschaltet ist.

11. Stromversorgung nach einem der Ansprüche 1 bis 10, wobei der Hilfsenergiespeicher (5) über die Hauptstromversorgung (4) aufladbar ist.

12. Elektronische Baueinheit (2) mit einer Stromversorgung (1) nach einem der Ansprüche 1 bis 11.

13. Elektronische Baueinheit (2) nach Anspruch 12, mit einem integrierten Kommunikationsmodul (3), wobei zumindest das Kommunikationsmodul (3) über die Stromversorgung (1) nach einem der Ansprüche 1 bis 11 betreibbar ist.

14. Verwendung einer Stromversorgung (1) nach einem der Ansprüche 1 bis 11 zum Betreiben einer elektronischen Baueinheit (2), insbesondere eines Netzwerkcomputers mit integriertem Kommunikationsmodul (3) oder einer mobilen Meldeeinrichtung mit integriertem Kommunikationsmodul (3).
